# EUROPÄISCHE PATENTSCHRIFT

(11) **EP 3 446 670 B1**
(45) Veröffentlichungstag und Bekanntmachung des Hinweises auf die Patenterteilung: **28.04.2021**
(21) Anmeldenummer: 17187968.7
(22) Anmeldetag: 25.08.2017
(51) Int. Cl.: A61G 5/04, B60L 3/00, B60L 15/20, B62K 11/00

(54) **ELEKTRONISCH SELBSTBALANCIERTER ROLLSTUHL**
ELECTRONICALLY SELF-BALANCED WHEELCHAIR
FAUTEUIL ROULANT À AUTO-EQUILIBRAGE ÉLECTRONIQUE

(43) Veröffentlichungstag der Anmeldung: 27.02.2019
(73) Patentinhaber: Rigler, Lukas, 4391 Waldhausen (AT)
(72) Erfinder: Rigler, Lukas, 4391 Waldhausen (AT)
(74) Vertreter: Ellmeyer, Wolfgang

(56) Entgegenhaltungen:
- WO-A1-2016/001451
- JP-A- 2007 186 184
- US-A1- 2010 114 421
- US-A1- 2010 305 841

## Beschreibung

Die Erfindung bezieht sich auf einen selbstbalancierten Rollstuhls gemäss dem Oberbegriff des Anspruchs 1.

Herkömmliche Rollstühle sind eigenstabil und benötigen daher keine gesonderte Abstützung. Oftmals sind zusätzlich stationäre Stützen verbaut welche jedoch nicht aktiv gesteuert werden. Diese bieten meist lediglich einen Kippschutz.

Selbstbalancierende Rollstühle bedürfen einer mechanischen Abstützung, weil diese bei Deaktivierung des Antriebssystems kippen würden. Sie sind mit mindestens zwei motorisch angetriebenen Rädern und
einer für die Balance, den Antrieb und die Steuerung des Rollstuhls zuständigen Steuereinrichtung für die motorisch angetriebenen Räder ausgestattet. Vorzugsweise ist auch zumindest einer Eingabevorrichtung für Steuerbefehle an die Steuereinrichtung vorhanden.

So beschreibt die EP1674065 einen selbstbalancierten Rollstuhl mit Joystickeingabe. Verändert der Nutzer seinen Schwerpunkt, so fährt der Rollstuhl nur die notwendige Strecke zum Ausgleich der Änderung des Schwerpunkts. Der Nutzer kann aber nicht rein durch Gewichtsverlagerung kontinuierliche Fahrt aufnehmen. Hierzu ist eine Eingabe über den Joystick erforderlich. In der EP1183163 ist ein Umschalten des selbstbalancierten Modus zum normalen, d.h. vierrädrigen bzw. zweiachsigen, Modus offenbart.

Die EP1161214 offenbart eine motorisierte Transporteinrichtung unter anderem für Personen, bei welcher eine zu grosse Neigung der Hochachse durch ein Bodenkontaktelement abgestützt wird. Über eine mechanische Verbindung kann eine nicht auf der Transporteinrichtung befindliche Person eine Bewegung der Transporteinrichtung bewirken.

In der WO2006042302 ist ein Verfahren beschrieben, das die Stabilisierung gegen vor- oder zurückkippen eines Fahrzeuges zum Gegenstand hat. Die Steuerung erfolgt auf Basis einer Kraft auf ein vorderes Rad des Fahrzeuges, über welche die Antriebseinrichtung zumindest eines allein angetriebenen hinteren Rades derart betätigt wird, dass eine dynamische Stabilisierung stattfindet. Unabhängig vom Bodenkontakt des vorderen Rades kann der Benutzer die Bewegung nach links oder rechts steuern.

Die Steuerung eines Rollstuhls über eine Eingabevorrichtung wie etwa einen Joystick ist bekannt und weit verbreitet. Üblicherweise wird die Lenkeingabe über eine Achse des Joysticks und die Beschleunigung/Bremseingabe über eine zweite Achse des Joysticks gesteuert.

Bei selbstbalancierenden Fahrzeugen wie z.B. dem Segway PT wird die Beschleunigung/Bremseingabe über Gewichtsverlagerung des Benutzers realisiert. Verlagert der Benutzer seinen Schwerpunkt nach vorne, so muss das Fahrzeug nach vor beschleunigen, um ein Kippen zu verhindern (Prinzip des inversen Pendels). Diese Tatsache wird benutzt um ein Steuern des Fahrzeuges durch Gewichtsverlagerung zu ermöglichen. Die Lenkeingabe bei diesen Geräten basiert auf einer separaten Vorrichtung.

Das gleiche Prinzip wird natürlich auch bei Rollstühlen verwendet, weiche auf dem Segway PT oder ähnlichen Systemen basieren. Je nach Schwerpunkt wird die Vor-Rückwärts Bewegung des Fahrzeuges gesteuert.

Bei herkömmlichen selbstbalancierenden Rollstühlen, welche mit Joystickeingabe gesteuert werden, ist dies nicht der Fall. Ein selbstbalancierender Rollstuhl, bei welchem die Vor- bzw. Rückwärtsfahrt über eine Joystickeingabe und nicht durch eine Gewichtsverlagerung des Benutzers gesteuert wird, ist immer bestrebt, die durch den Benutzer bewirkte Schwerpunktsveränderung durch Neigung des Fahrzeuges auszugleichen. Dadurch wird der für den Ausgleich notwendige Weg, aber nicht mehr, zurückgelegt. Um eine Vor-Rückwärts-Bewegung zu erreichen, nimmt der Rollstuhl als Referenz einzig und allein die Joystickeingabe.

So ist in der US 2010/0305841 A1 ein selbstbalancierender Rollstuhl mit zwei Rädern gezeigt, der eine Steuereinrichtung und eine Eingabevorrichtung aufweist. Die Steuereinrichtung ermöglicht das Fahren des Rollstuhls unter dem Prinzip des inversen Pendels, wobei eine Neigung der Hochachse in Steuerbefehle für die Balance, den Antrieb und die Steuerung umgewandelt werden. Eine frei wählbare Aufteilung und Gewichtung zwischen Steuerung des Rollstuhls durch Gewichtsverlagerung und zwischen Steuerung des Rollstuhls mittels Eingabevorrichtung ist in diesem Dokument nicht gezeigt.

Die US 2010/0114421 A1 offenbart einen Rollstuhl mit zwei Rädern, der eine Hauptsteuereinrichtung für den Antrieb, die Balance und die Steuerung aufweist. Zudem weist das Fahrzeug eine Eingabevorrichtung auf, mittels der das Beschleunigen und Abbremsen ermöglicht wird, während diese Vorgänge mit Hilfe von Gewichtsverlagerung nicht ausgeführt werden können. Auch die Fahrzeuge, die in der JP 2007-186184 A und in der WO 2016/001451 A1 beschrieben sind, weisen jeweils nur eine Form der Steuerung auf. Es war die Aufgabe der vorliegenden Erfindung, eine größere Flexibilität in der Steuerung des Rollstuhls und deren Adaptierung auf die Möglichkeiten und/oder die Wünsche des Benutzers zu erreichen. Zur Lösung dieser Aufgabe ist ein selbstbalancierter Rollstuhl wie eingangs beschrieben dadurch gekennzeichnet, dass die Steuereinrichtung konfiguriert ist, die Steuerung des Rollstuhls in einem einstellbaren Verhältnis zwischen der Eingabe über den Joystick und einer Eingabe über Gewichtsverlagerung durch den Benutzer des Rollstuhls vorzunehmen, wobei die Bewertung und Priorisierung dieser beiden Benutzereingaben, nämlich wie stark sich die Gewichtsverlagerung und Joystickeingabe auf die Geschwindigkeit/Beschleunigung auswirken, frei einstellbar ist. Diese Neigung gegenüber der Referenzlage wird typischerweise durch eine Gewichts- bzw. Schwerpunktsverlagerung durch den Benutzer aktiv bewirkt, wobei auch die Balance des Fahrzeuges über diese Neigung funktioniert.

Bevorzugt ist sie Steuereinrichtung ausgelegt, um eine Neigung der Hochachse des Rollstuhls gegenüber einer Referenzlage in Steuerbefehle für die Balance des Rollstuhls umzusetzen, und um eine Betätigung der Eingabevorrichtung in Steuerbefehle für den Antrieb und die Steuerung des Rollstuhls umzusetzen.

Bevorzugt ist sie Steuereinrichtung ausgelegt, um eine Neigung der Hochachse des Rollstuhls gegenüber einer Referenzlage in Steuerbefehle für die Balance des Rollstuhls umzusetzen, und um eine Betätigung der Eingabevorrichtung in Steuerbefehle für den Antrieb und die Steuerung des Rollstuhls umzusetzen.

Eine alternative Ausführungsform der Erfindung ist hingegen dadurch gekennzeichnet, dass die Steuereinrichtung ausgelegt ist, um eine Neigung der Hochachse des Rollstuhls in Steuerbefehle für die Balance und den Antrieb umzusetzen, und um eine Betätigung der Eingabevorrichtung in Steuerbefehle für die Steuerung des Rollstuhls umzusetzen.

Bei beiden Varianten kann optional vorgesehen sein, dass die Steuereinrichtung ausgelegt ist, um eine Betätigung einer Eingabevorrichtung in eine Umschaltung zwischen den Modi der beiden vorhergehenden Absätze umzusetzen.

Eine weitere bevorzugte Ausführungsform der Erfindung sieht vor, dass die Steuereinrichtung ausgelegt ist, um eine Betätigung einer Eingabevorrichtung in Änderungen zumindest eines Parameters der Steuereinrichtung umzusetzen. Damit ist für bestimmte Fahrmanöver des Rollstuhls eine gemischte Steuerung möglich, bei der Steuereinwirkungen durch Gewichtsverlagerung mit Steuereinwirkungen durch Joystickeingabe kombiniert werden. Beispielsweise könnte die prinzipielle Ansteuerung der Fahrtrichtung durch Gewichtsverlagerung mit der Anwahl der gewünschten oder maximal möglichen Geschwindigkeit über den Joystick kombiniert werden.

Diese Ausführungsform ist bevorzugt derart ausgelegt, um eine Betätigung einer Eingabevorrichtung in eine Änderung der Referenzlage der Hochachse des Rollstuhls umzusetzen.

Eine weitere vorteilhafte Weiterbildung dieser Ausführungsform ist dadurch gekennzeichnet, dass die Steuereinrichtung ausgelegt ist, um für den Fall gegensätzlicher Steuerbefehle zusätzlich zur Betätigung der Eingabevorrichtung die aktuelle Lage der Hochachse des Rollstuhls zu berücksichtigen.

Weitere Vorteile, Merkmale und Einzelheiten der Erfindung ergeben sich aus der nachfolgenden Beschreibung, in der unter Bezugnahme auf die Zeichnung Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Eine besonders vorteilhafte Anwendung für die oben dargelegten Merkmale ist bei einem Fahrzeug, insbesondere einem Rollstuhl gegeben, mit mindestens zwei motorisch angetriebenen Rädern und einer für die Balance, den Antrieb und die Steuerung des Rollstuhls zuständigen Hauptsteuereinrichtung für die motorisch angetriebenen Räder im Balance- und/oder Drehzahlmodus, welcher ein Stützsystem aufweist, umfassend mindestens eine erste Stützeinrichtung, die in zumindest einige Positionen zwischen einer komplett eingefahrenen und einer komplett ausgefahrenen Stellung verfahrbar ist, wobei die Stützeinrichtung mit einem Bodenkontaktelement versehen ist, sowie einem Antrieb für das Verfahren der Stützeinrichtung. Dieses Stützsystem kann derart ausgelegt sein, dass die Hauptsteuereinrichtung eine Stützsteuereinrichtung beinhaltet, wobei die Hauptsteuereinrichtung ausgelegt ist, um zumindest einen Teil von deren Steuersignalen und Kontrollsignalen für die Balance, den Antrieb und die Steuerung des Rollstuhls auch an die Stützsteuereinrichtung zu übergeben. Weiters kann gegebenenfalls zumindest ein Bedienungselement zur direkten Eingabe von Steuerbefehlen in die Stützsteuereinrichtung am Stützsystem oder am Rollstuhl positioniert sein. Dazu ist Stützsteuereinrichtung ausgelegt, um in Abhängigkeit von den Steuersignalen, Steuerbefehlen, Kontrollsignalen und allfälligen Steuerbefehlen zumindest eine Stützeinrichtung zumindest teilweise auszufahren bzw. wieder einzufahren.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

### Dabei zeigt die

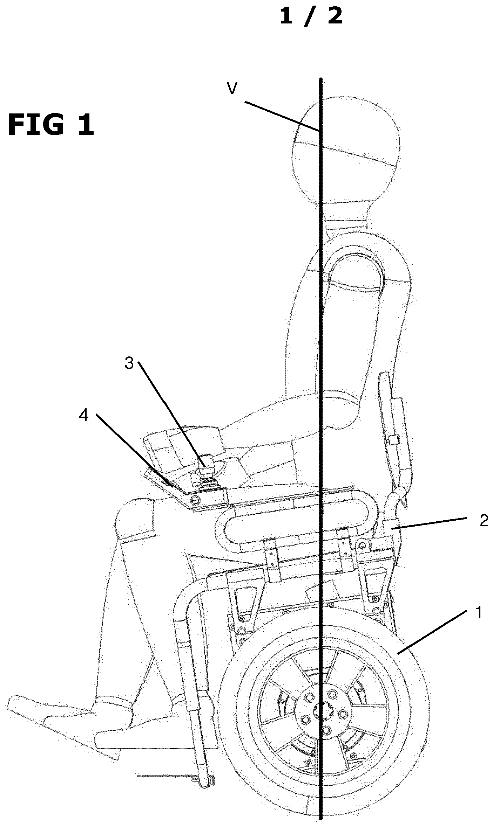

Fig. 1 eine Seitenansicht eines Rollstuhls, bei welchem die Erfindung vorteilhaft zur Anwendung kommen kann, und
Fig. 2 schematisch die erfindungswesentlichen Elemente des Rollstuhls und deren Verbindung.

Es handelt sich hier um einen selbstbalancierenden Rollstuhl, gegebenenfalls mit einer zusätzlichen mechanischen Abstützung, um ein Umkippen bei Deaktivierung des Antriebssystems zu verhindern. In gleicher Weise ist die Erfindung aber auch bei anderen, gleichartig konstruierten Fahrzeugen anwendbar.

Die zwei motorisch angetriebenen Räder 1 sind über eine Steuereinrichtung 5 für die Balance gegenüber einer vertikalen Achse V, den Antrieb 6 und die Steuerung des Rollstuhls betätigbar, welche Steuereinrichtung 5 an oder in der tragenden Struktur 2 des Rollstuhls angeordnet ist. Zusätzlich sind ein Joystick 3 und/oder eine Tastatur 4 als Eingabevorrichtungen für Steuerbefehle des Benutzers an die Steuereinrichtung 5 vorhanden. Die Neigung des Rollstuhls gegenüber der Vertikalen wird über einen Beschleunigungs- und/oder Lagesensor 7, etwa einen Gyrosensor, ermittelt. Zusätzlich können weitere Sensoren für Beschleunigungen, Geschwindigkeit, räumliche Lage, etc. vorhanden und mit der Steuereinrichtung 5 verbunden sein.

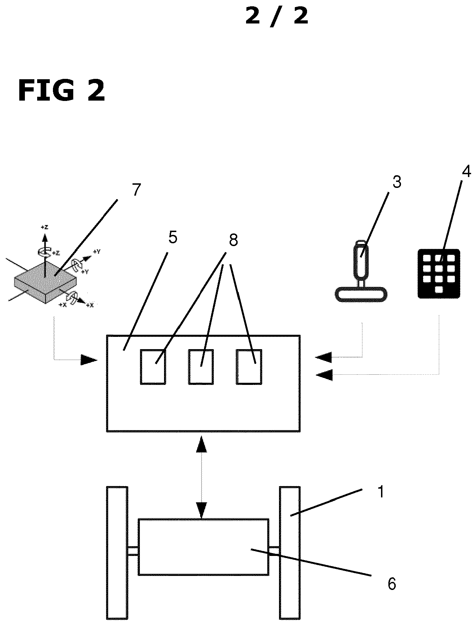

In Fig. 2 sind auch durch Pfeile die Verbindungen zwischen den einzelnen erfindungswesentlichen Elementen symbolisiert, wobei durch die Pfeilrichtung auch die Richtung der Signalübermittlung angedeutet ist. Während von den Eingabevorrichtungen 3, 4 bzw. vom Beschleunigungs- und/oder Lagesensor 7 der Fluss von Steuersignalen hin zur Steuereinrichtung 5 läuft (abgesehen von allfälligen haptischen oder sonstigen Rückmeldungen an die Eingabevorrichtungen oder separate Anzeigeeinrichtungen), ist zwischen Steuereinrichtung 5 und Antrieb 6 der Räder 1 ein Steuer- und Signalfluss in beiden Richtungen vorgesehen.

Die Steuerung des Rollstuhls kann nun erfindungsgemäss sehr flexibel an die Bedürfnisse und Wünsche des Benutzers adaptiert werden. So kann beispielsweise die Geschwindigkeit bzw. Beschleunigung des Rollstuhls rein über den Joystick 3 gesteuert werden.

Verändert der Nutzer seinen Schwerpunkt, so kompensiert das Fahrzeug die Veränderung durch kleine Fahrwege nach vorne oder nach hinten und damit einer entsprechenden Veränderung seiner Neigung gegenüber der vertikalen Achse V, legt dabei nur den für die Winkeländerung notwendigen Weg zurück. Im Fahrbetrieb werden entsprechende kurzzeitige Anpassungen der Geschwindigkeit durch kurz Beschleunigungs- bzw. Bremsmanöver vorgenommen. Der Nutzer kann aber - in diesem Modus - nicht allein durch Gewichtsverlagerung kontinuierliche Fahrt aufnehmen. Dieser Modus ist generell komfortabel und bedarf keinerlei Fitness bzw. grosser Beweglichkeit des Oberkörpers.

Neigt sich der Nutzer nach vor oder zurück, so ändert das Fahrzeug seine Neigung um den Schwerpunkt in der Achse der Räder 1 zu halten. Das Fahrzeug nimmt aber keine kontinuierliche Fahrt auf.

Vorzugsweise nach Aktivierung durch den Benutzer mittels einer der Eingabevorrichtungen 3, 4 ist eine Ansteuerung des Antriebs der Räder 1 möglich, bei welcher die Geschwindigkeit bzw. die Beschleunigung des Rollstuhls rein über Gewichtsverlagerung (Verschiebung des Schwerpunktes) erreicht werden kann. Lenkeingaben werden separat und manuell über beispielsweise den Joystick 3 durchgeführt.

Dieser Modus bedarf einer guten Mobilität des Oberkörpers des Benutzers. Allerdings ist aufgrund der sitzenden Position des Nutzers die Gewichtsverlagerung nach hinten und damit das Abbremsen des Fahrzeuges schwierig. Dieser zweite Modus gibt dem Nutzer aber ein sehr aktives Fahrgefühl und stärkt durch die Bewegung des Oberkörpers die Muskulatur des Rollstuhlfahrers bzw. aktiviert diese Muskulatur.

Ein weiterer möglicher Modus, der wie auch die übrigen Modi in der Steuereinrichtung 5 implementiert ist, ermöglicht je nach Benutzerwunsch bzw. körperlicher Möglichkeit die Steuerung des Rollstuhls in einem einstellbaren Verhältnis zwischen der Eingabe über den Joystick 3 und/oder die Tastatur 4 und einer Gewichtsverlagerung des Benutzers des Rollstuhls.

Somit kann der Nutzer je nach Wunsch, körperlicher Möglichkeit und Fitness einstellen, wie stark die Regelung des Fahrzeuges seine Gewichtsverlagerung bzw. die Eingabe über den Joystick 3 bewerten soll. Die Bewertung und Priorisierung dieser beiden Benutzereingaben (wie stark sich Gewichtsverlagerung und Joystickeingabe auf die Geschwindigkeit/Beschleunigung auswirken) kann auf jegliche Art eingestellt werden.

So kann beispielsweise der Benutzer durch Gewichtsverlagerung beschleunigen, jedoch mittels Joystickeingabe bremsen. Beziehungsweise kann der Nutzer z.B. durch Joystickeingabe 50% der Endgeschwindigkeit erreichen und durch zusätzliche Gewichtsverlagerung dann die 100%. Auch könnte der Nutzer durch Gewichtsverlagerung bis 100% der maximal möglichen Geschwindigkeit beschleunigen, dabei aber über den Joystick die maximale Beschleunigung bzw. die maximal mögliche Geschwindigkeit einstellen. Diese Verknüpfungen ermöglichen eine Vielzahl von Möglichkeiten, das Verhalten des Rollstuhls über die Gewichtsverlagerung und die manuellen Steuereingaben über die Eingabevorrichtungen 3, 4 zu beeinflussen. So kann beispielsweise vorgesehen sein, dass die Steuereinrichtung 5 derart ausgelegt ist, um mit beispielsweise dem Joystick 3 die Beschleunigung vorzugeben. Die Stellung "Joystick nach vorne" kann in ein Schnellerwerden des Rollstuhls umgesetzt werden, die Stellung "Joystick in der Neutralstellung" bedeutet hingegen, dass die Geschwindigkeit gehalten wird, während die Stellung "Joystick nach hinten" zu einer Verlangsamung führt.

Ein besonders vorteilhafter und in der Steuereinrichtung 5 implementierter Modus betrifft die Nullpunkteinstellung für die Neigung des Rollstuhls gegenüber der vertikalen Achse V. Damit können in einfacher Weise die Winkel der Sitzfläche und/oder Rückenlehne zu einer Referenzachse, beispielsweise der vertikalen Achse V, oder einer Referenzebene nach Belieben definiert werden. Dadurch kann sich der Benutzer beliebig auf dem Fahrzeug positionieren. Während des eigentlichen Verstellvorganges regelt das Fahrzeug die Änderung des Schwerpunkts des Benutzers durch Winkelverstellung aus. Der Nutzer kann also bei beliebigen Sitzpositionen den jeweiligen Winkel des Fahrzeugs gegenüber der vertikalen Achse V als neue Nulllage - d.h. als Ausgangslage, aus der Auslenkungen als Steuereingaben angesehen werden - definieren. Schaltet der Nutzer danach z.B. in den weiter oben beschriebenen Modus, bei dem Gewichtsverlagerungen als Steuereingaben genutzt werden, würde das Fahrzeug bei gleichbleibender Sitzposition keine Fahrt aufnehmen, obwohl sich der Fahrer nicht in der ursprünglichen neutralen Sitzposition (vor der neu definierten Nullpunkteinstellung) befindet.

Die oben beschriebenen unterschiedlichen Modi können in Form von Software-Routinen 8 implementiert sein, d.h. als Programmprodukt bzw. Unterprogramme der Antriebssteuerung in einem Programmspeicher der Steuereinrichtung 5 fix abgelegt oder in diesen Speicher geladen sein. Es können aber auch die einzelnen Modi durch fix verdrahtete separate Schaltungsabschnitte dargestellt sein, welche je nach Benutzereingabe aktiviert oder deaktiviert werden können.

### Bezugszeichenliste

- 1: Räder
- 2: Tragende Struktur
- 3: Joystick
- 4: Tastatur
- 5: Steuereinrichtung
- 6: Antrieb
- 7: Gyrosensor
- 8: Software-Routinen
- V: Vertikale

## Patentansprüche

1. Elektronisch selbstbalancierter Rollstuhl,
mit mindestens zwei motorisch angetriebenen Rädern (1) und einer für die Balance, den Antrieb und die Steuerung des Rollstuhls zuständigen Steuereinrichtung (5) für die motorisch angetriebenen Räder, sowie zumindest einer Eingabevorrichtung (3, 4) für Steuerbefehle an die Steuereinrichtung (5), wobei ein Joystick (3) und/oder eine Tastatur (4) als Eingabevorrichtung für die Steuerbefehle des Benutzers an die Steuereinrichtung (5) vorhanden sind,
**dadurch gekennzeichnet, dass**
die Steuereinrichtung (5) konfiguriert ist, die Steuerung des Rollstuhls in einem einstellbaren Verhältnis zwischen der Eingabe über den Joystick (3) und einer Eingabe über Gewichtsverlagerung durch den Benutzer des Rollstuhls vorzunehmen, wobei die Bewertung und Priorisierung dieser beiden Benutzereingaben, nämlich wie stark sich die Gewichtsverlagerung und Joystickeingabe auf die Geschwindigkeit/Beschleunigung auswirken, frei einstellbar ist.

2. Rollstuhl nach Anspruch 1, **dadurch gekennzeichnet, dass** die Steuereinrichtung (5) ausgelegt ist, um eine Neigung der Hochachse des Rollstuhls gegenüber einer Referenzlage in Steuerbefehle für die Balance des Rollstuhls umzusetzen, und um eine Betätigung der Eingabevorrichtung (3, 4) in Steuerbefehle für den Antrieb und die Steuerung des Rollstuhls umzusetzen.

3. Rollstuhl nach Anspruch 1, **dadurch gekennzeichnet, dass** die Steuereinrichtung (5) ausgelegt ist, um eine Neigung der Hochachse des Rollstuhls in Steuerbefehle für die Balance und den Antrieb umzusetzen, und um eine Betätigung der Eingabevorrichtung (3, 4) in Steuerbefehle für die Steuerung des Rollstuhls umzusetzen.

4. Rollstuhl nach Anspruch 2 oder 3, **dadurch gekennzeichnet, dass** die Steuereinrichtung (5) ausgelegt ist, um eine Betätigung einer Eingabevorrichtung (3, 4) in eine Umschaltung zwischen den Modi der Ansprüche 2 und 3 umzusetzen.

5. Rollstuhl nach einem der vorhergehenden Ansprüche, **dadurch gekennzeichnet, dass** die Steuereinrichtung (5) ausgelegt ist, um eine Betätigung einer Eingabevorrichtung (3, 4) in Änderungen zumindest eines Parameters der Steuereinrichtung (5) umzusetzen.

6. Rollstuhl nach Anspruch 5, **dadurch gekennzeichnet, dass** die Steuereinrichtung (5) ausgelegt ist, um eine Betätigung einer Eingabevorrichtung (3, 4) in eine Änderung der Referenzlage der Hochachse des Rollstuhls umzusetzen.

7. Rollstuhl nach Anspruch 6, **dadurch gekennzeichnet, dass** die Steuereinrichtung (5) ausgelegt ist, um für den Fall gegensätzlicher Steuerbefehle zusätzlich zur Betätigung der Eingabevorrichtung (3, 4) die aktuelle Lage der Hochachse des Rollstuhls zu berücksichtigen.

## Claims

1. An electronically self-balanced wheelchair comprising at least two motor-driven wheels (1), a controller (5) of said motor-driven wheels being capable of balancing, driving and controlling the wheelchair and at least one input device (3, 4) for providing control commands to said controller (5), a joystick (3) and/or a keyboard (4) being used as the input device for control commands of a user for said controller (5),
**characterized in that**
said controller (5) is configured to carry out the control of the wheelchair based on an adjustable relationship between an input via the joystick (3) and an input that is made via a shifting of weight by the user of the wheelchair, the evaluation and prioritization of these two user inputs, i.e., to what extent the shifting of weight and the joystick input is affecting the velocity/acceleration, being freely adjustable.

2. The wheelchair according to claim 1, **characterized in that** said controller (5) is configured to convert an inclination of the wheelchair's vertical axis relative to a reference position into control commands for balancing the wheelchair and to convert an actuation of said input device (3, 4) into control commands for driving and controlling the wheelchair.

3. The wheelchair according to claim 1, **characterized in that** said controller (5) is configured to convert an inclination of the wheelchair's vertical axis into control commands for balancing and driving the wheelchair and to convert an actuation of said input device (3, 4) into control commands for controlling the wheelchair.

4. The wheelchair according to claim 2 or claim 3, **characterized in that** said controller (5) is configured to convert an actuation of said input device (3, 4) into switching between the modes according to claim 2 and claim 3.

5. The wheelchair according to any one of the preceding claims, **characterized in that** said controller (5) is configured to convert an actuation of said input device (3, 4) into a change of at least one parameter of said controller (5).

6. The wheelchair according to claim 5, **characterized in that** said controller (5) is configured to convert an actuation of said input device (3, 4) into a change of the reference position of the wheelchair's vertical axis.

7. The wheelchair according to claim 6, **characterized in that** said controller (5) is configured to take into account the current position of the wheelchair's vertical axis in addition to the actuation of said input device (3, 4) in case of conflicting control commands.

## Revendications

1. qui est responsable pour l'équilibrage, l'entraînement et la commande du fauteuil roulant, et au moins un dispositif d'entrée (3, 4) pour des instructions de commande pour le dispositif de commande (5), une manette (3) et/ou un clavier (4) étant utilisés comme dispositifs d'entrée pour des instructions de commande d'un utilisateur pour le dispositif de commande (5),
**caractérisé en ce que**
ledit dispositif de commande (5) est configuré pour commander le fauteuil roulant sur la base d'une relation réglable entre l'entrée via le joystick (3) et une entrée qui est faite au moyen d'un déplacement de poids de l'utilisateur du fauteuil roulant, la pondération et la priorisation de ces deux entrées de l'utilisateur, c'est-à-dire l'impact que le déplacement de poids et l'entrée du joystick ont sur la vitesse/accélération, étant librement réglables.

2. Fauteuil roulant selon la revendication 1, **caractérisé en ce que** ledit dispositif de commande (5) est configuré pour convertir une inclinaison de l'axe vertical du fauteuil roulant par rapport à une position de référence en commandes de contrôle pour équilibrer le fauteuil roulant, et pour convertir un actionnement dudit dispositif d'entrée (3, 4) en commandes de contrôle pour entraîner et commander le fauteuil roulant.

3. Fauteuil roulant selon la revendication 1, **caractérisé en ce que** ledit dispositif de commande (5) est configuré pour convertir une inclinaison de l'axe vertical du fauteuil roulant en commandes de contrôle pour l'équilibrage et l'entraînement du fauteuil roulant, et pour convertir un actionnement dudit dispositif d'entrée (3, 4) en commandes de contrôle pour la commande du fauteuil roulant.

4. Fauteuil roulant selon la revendication 2 ou la revendication 3, **caractérisé en ce que** ledit dispositif de commande (5) est configuré pour convertir un actionnement dudit dispositif d'entrée (3, 4) pour changer entre le modes selon la revendication 2 et le mode selon la revendication 3.

5. Fauteuil roulant selon l'une quelconque des revendications précédentes, **caractérisé en ce que** ledit dispositif de commande (5) est configuré pour convertir un actionnement dudit dispositif d'entrée (3, 4) en une modification d'au moins un paramètre dudit dispositif de commande (5).

6. Fauteuil roulant selon la revendication 5, **caractérisé en ce que** ledit dispositif de commande (5) est configuré pour convertir un actionnement dudit dispositif d'entrée (3, 4) pour changer la position de référence de l'axe vertical du fauteuil roulant.

7. Fauteuil roulant selon la revendication 6, **caractérisé en ce que** ledit dispositif de commande (5) est configuré pour prendre en compte la position actuelle de l'axe vertical du fauteuil roulant en plus de l'actionnement dudit dispositif d'entrée (3, 4) en cas de commandes de contrôle contradictoires.
